# EUROPEAN PATENT SPECIFICATION

(11) **EP 1 806 945 B1**
(45) Date of publication and mention of the grant of the patent: **09.08.2017**
(21) Application number: 07000265.4
(22) Date of filing: 08.01.2007
(51) Int. Cl.: H04L 25/02, H04L 5/00, H04W 16/26, H04W 84/04, H04B 7/26

(54) **Apparatus and method of providing relay service in Broadband Wireless Access (BWA) communication system**
Vorrichtung und Verfahren zur Bereitstellung eines Weiterleitungsdienstes in Kommunikationsnetzen mit drahtlosem Breitbandzugang
Appareil et procédé de fourniture d'un service de relais dans un système de communication à accès sans fil à large bande

(30) Priority: 06.01.2006 KR 20060001864
(43) Date of publication of application: 11.07.2007
(73) Proprietor: Samsung Electronics Co., Ltd., Suwon-si, Gyeonggi-do, 443-742 (KR)
(72) Inventor: Lee, Mi-Hyun, Seoul (KR); Cho, Jae-Weon, Yeongtong-gu Suwon-si Gyeonggi-do (KR); Park, Jeong-Ho, Seocho-gu Seoul (KR); Hong, Song-Nam, Gangdong-gu Seoul (KR); Joo, Pan-Yuh, Seocho-gu Seoul (KR); Jung, Jun-Young, Giheung-gu, Yongin-si Gyeonggi-do (KR)
(74) Representative: Grünecker Patent- und Rechtsanwälte PartG mbB

(56) References cited:
- WO-A1-2006/098608
- US-A1- 2003 086 366
- US-A1- 2005 232 183

## Description

### BACKGROUND OF THE INVENTION

### 1. Field of the Invention

The present invention relates generally to an apparatus and method of providing a relay service in a cellular communication system, and in particular, to an apparatus and method of supporting independent channel estimation of a relay link when a direct link and the relay link are distinguished through a frequency multiplexing in a Broadband Wireless Access (BWA) communication system.

Herein, the direct link refers to a link between a base station and a mobile station and the relay link refers to a link between a relay station and a mobile station.

### 2. Description of the Related Art

In the fourth generation (4G) communication system, extensive research is being conducted to provide users with various Quality of Service (QoS) at a data rate of over 100 Mbps. Specific research is focusing on the high rate service to the guarantee mobility and the QoS in Broadband Wireless Access (BWA) communication systems such as Local Area Networks (LAN) and Metropolitan Area Networks (MAN). Representative systems of the BWA communication system include the Institute of Electrical and Electronics Engineers (IEEE) 802.16 communication system.

One of the most important requirements of the 4G communication system is a self-configurable wireless network configuration. The self-configurable wireless network refers to a wireless network which can provide mobile communication services by configuring the wireless network in an autonomous and distributive manner without control of a central system. Generally, in the 4G communication system, cells of a very small radius are installed to enable a high-speed communication and accommodate more traffic. In this case, it is anticipated that the centralized design using the current wireless network design scheme is impossible. Accordingly, while being controlled and deployed in the distributive manner, the 4G communication system should be able to actively cope with environmental change such as joining of a new base station. To respond to this, the self-configurable wireless network is required in the 4G communication system.

In practice, to implement the self-configurable wireless network required for the 4G communication system, a technique applied to an ad-hoc network needs to be adopted to the wireless communication system. A representative case of this adoption is a multihop relay cellular network, where the multihop relay scheme of the ad-hoc network is applied to the cellular network including a fixed base station.

In a general cellular communication system, since signals are transmitted and received between a fixed base station and a mobile station through a direct link, a highly reliable wireless communication link can be easily established between the base station and the mobile station. However, since the position of the base station is fixed, the wireless network configuration suffers low flexibility. As a result, it is hard to provide efficient communication services under a radio environment experiencing severe change of traffic distribution or traffic requirements.

To overcome those shortcomings, a multihop relay data delivery scheme can be applied to the general cellular wireless communication system using a fixed or mobile relay station or a general mobile station. The multihop relay wireless communication system is able to reconfigure the network by promptly handling the communication environment change and far more efficiently utilize the entire wireless network. For instance, the multihop relay wireless communication system can expand a cell service coverage area and increase the overall system capacity. When a channel status between the base station and the mobile station is poor, a multihop relay path is established by way of a relay station by interposing the relay station between the base station and the mobile station. The radio channel with a better channel status can be provided to the mobile station. In addition, in a cell boundary region with the poor channel status from the base station, the multihop relay scheme can provide the high-speed data channel and expand the cell service coverage area.

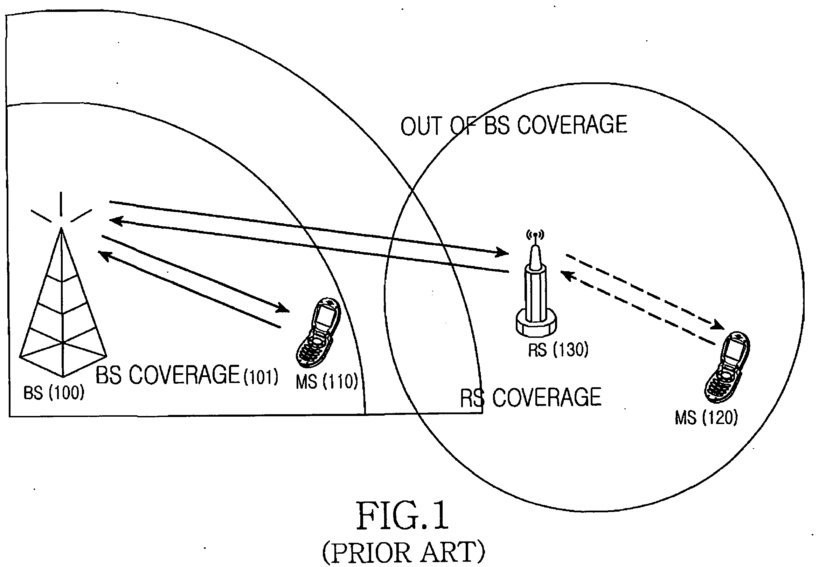

FIG. 1 illustrates a configuration of a general multihop relay cellular network.

As shown in FIG. 1, a Mobile Station (MS) 110 belonging to a coverage 101 of a Base Station (BS) 100, is connected to the BS 100 through a direct link. An MS 120, which is out of the BS coverage area 101 and suffers poor channel status from the BS 100, is connected to the BS 100 via a Relay Station (RS) 130.The link between the BS 100 and the MS 110 is referred to as a direct link, and the link between the RS 130 and the MS 120 is referred to as a relay link. The BS 100 and the RS 130 communicate with each other through the direct link.

If an MS is located in the cell boundary of the BS 100 or in a shadow area where shielding, for example caused by buildings, is extreme, the MS communicates with the BS 100 via the RS 130. As such, by adopting the multihop relay scheme in the cell boundary area in the poor channel status, the high-speed data channel can be provided and the cell service coverage can be expanded.

As discussed above, in a future time, the BWA communication system can utilize the relay service for the service coverage expansion and the capacity increase of the serving cell. The RS and the BS can share the same frequency band within the serving cell which supports the relay service, and should use the same subchannel allocation scheme in the Orthogonal Frequency Division Multiplexing (OFDM) symbol structure to avoid interference. The subchannel, which is provided to support the multiple access scheme of Orthogonal Frequency Division Multiple Access (OFDMA), is largely divided to a diversity subcarrier allocation, an adjacent subcarrier allocation, and a hybrid subcarrier allocation, based on the allocation scheme.

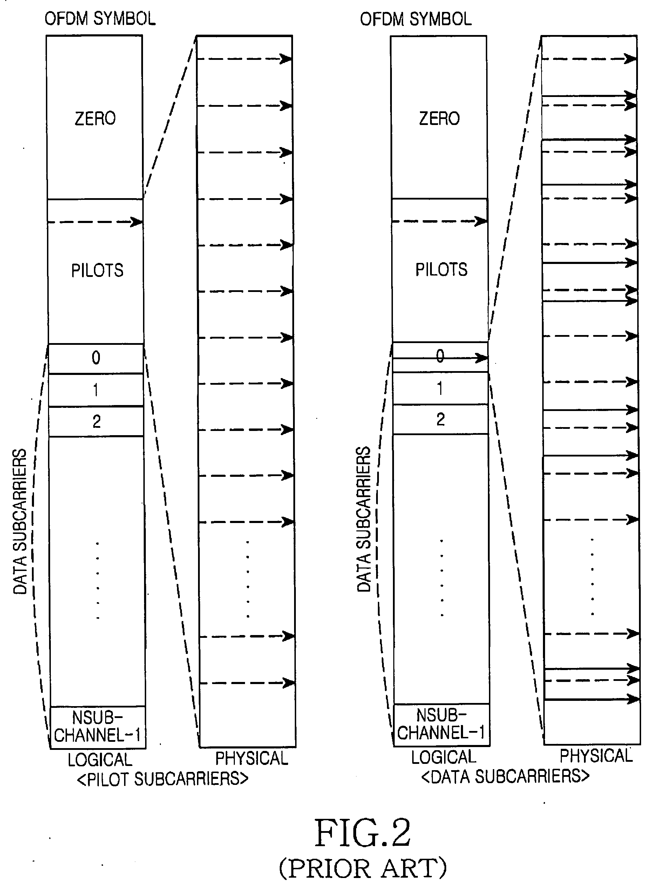

The diversity subcarrier allocation first allocates zero subcarriers and pilot subcarriers in the OFDM symbol and utilizes as data subcarriers by grouping the remaining subcarriers as subchannels. FIG. 2 illustrates a Full Usage of Subcarrier (FUSC) scheme which is one of the diversity subcarrier allocation schemes. The data subchannel and the pilot subcarriers are independent from each other. Representative examples of the diversity subcarrier allocation include downlink (DL) FUSC, DL Optional FUSC (OFUSC), DL Partial Usage of Subcarrier (PUSC) and so forth, in the IEEE 802.16 system. The DL PUSC allocates pilot subcarriers and then allocates data subcarriers by dividing the remaining logical subchannels into three logical areas. Each of the three logical areas independently allocates the pilot subcarrier.

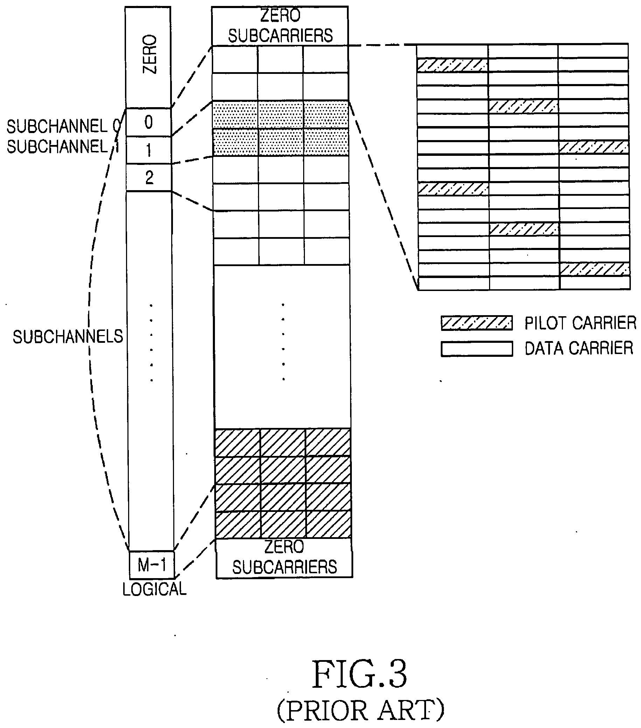

The adjacent subcarrier allocation configures one subchannel by grouping adjacent subcarriers and allocates data subcarriers and pilot subcarriers at certain positions within one subchannel. FIG.3 illustrates an Adaptive Modulation and Coding (AMC) scheme which is one of the adjacent subcarrier allocation schemes, where the subchannel is configured using physically adjacent subcarriers.

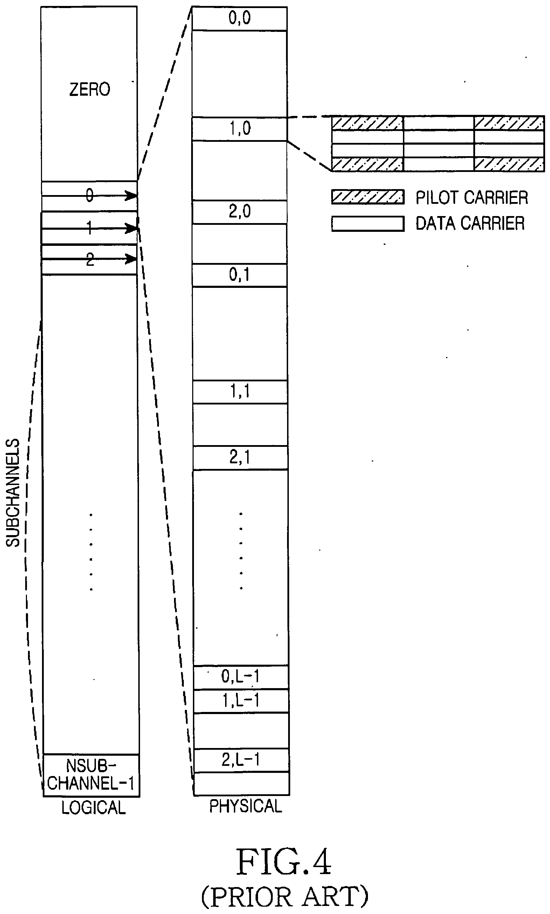

The hybrid subcarrier allocation groups adjacent subcarriers in the entire frequency band by a certain unit and configures a subchannel by taking a certain number of units to acquire the diversity gain. In the unit, the data subcarrier and the pilot subcarrier are allocated to fixed positions. FIG. 4 illustrates an uplink (UL) PUSC which is one of the hybrid subcarrier allocation schemes, where the subchannel is configured using a plurality of units (3 symbols×4 subcarriers) that are physically separated from one another.

Since an IEEE 802.16 system, which is one of the BWA communication systems, supports a Point to Multi-Point (PMP) mode, the subcarrier allocation scheme is defined for each link. In general, the DL employs the subcarrier allocation schemes of PUSC, FUSC, OFUSC, TUSC1, TUSC2, PUSC-Adjacent Subcarrier Allocation (ASCA), and the UL employs PUSC and OPUSC. AMC is used in both the DL and the UL.

In the multihop relay cellular system as discussed above, the MS, in order to communicate with not only the BS but also the RS in some cases, needs to distinguish an BS-MS link (or the direct link) from an RS-MS link (or the relay link) by distributing resources provided from an air interface. For instance, the MS can distinguish the direct link from the relay link by performing frequency division multiplexing on the entire frequency band. Additionally, the multiple access of the OFDMA can be considered for a plurality of RSs.

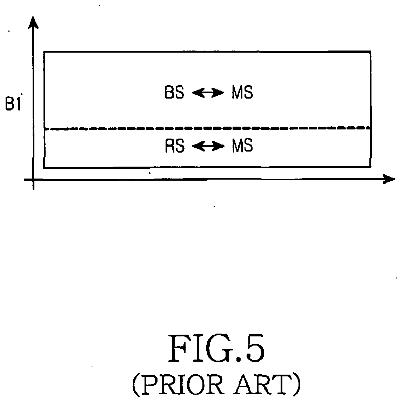

FIG. 5 illustrates a frame structure which distinguishes the direct link from the relay link according to the frequency division multiplexing scheme. In FIG. 5, the horizontal axis indicates time and the vertical axis indicates frequency. As shown in FIG. 5, the BS and the RS divide one frame into orthogonal resource based subframes. Herein, the upper subframe is referred to as a BS-MS subframe (or direct subframe) and the lower subframe is referred to as an RS-MS subframe (or relay link subframe).

To execute the frequency division multiplexing on the direct link and the relay link within one frequency band as shown in FIG. 5, the same subcarrier allocation scheme should be used. Also, to support two links within one band, pilot subcarriers for the respective links are required. Viewed in this light, when both the direct link and the relay link use the diversity subcarrier allocation scheme, there exists only one pilot pattern. As a result, the pilots overlap. If both of the direct link and the relay link use the adjacent subcarrier allocation scheme, it is hard to obtain the diversity gain. When using the hybrid subcarrier allocation scheme, there is a problem that the pilot overhead increases for the area operable as the PMP.

When a plurality of RSs establishing a relay link are allocated the different subchannels to implement the multiple access by virtue of the OFDMA, the data subcarriers do not collide but the pilot subcarriers may collide according to the subcarrier allocation scheme. Upon the collision of the pilots, the MS estimates the summation of the channels. Thus, the actual data channel does not match the estimated channel, to thus greatly degrade the system performance.

As discussed above, when the direct link and the relay link are distinguished using the frequency multiplexing scheme, what is demanded is a method which can satisfy the independent channel estimation for the relay link without increasing the pilot overhead.

US 2005/232183 A1 discloses a method and an apparatus for relay facilitated communications. Communications sourced by a remote unit that is already within reception range of a base side can be further facilitated through allocation of one or more relay resources that can then serve to effectively increase the quality of service for the facilitated communication. The relaying devices may receive data to be relayed on a first set of frequencies and relay the data on a second set of frequencies. In particular, in a communication system employing frequency division multiplexing, a relay unit may receive data to be relayed over a first set of subcarriers, and relay the data over a second set of subcarriers, with both the first and the second set of subcarriers being part of an allocated uplink frequency band. According to this document, in a broadband wireless system, a relay resource can initially and/or periodically perform network entry and initialization in a manner similar to conventional subscriber stations. A conventional remote unit in an 802.16 system will synchronize to the base station in terms of frequency reference, which can be done by monitoring the base station download transmission of the preambles, pilot symbols, or the like. The relay resources may be synchronized to the base station timing and frequency so that the transmissions from the selected relay resources arrive at the base station approximately synchronously.

### SUMMARY OF THE INVENTION

An aspect of the present invention is to substantially solve at least the above problems and/or disadvantages and to provide at least the advantages below. Accordingly, an aspect of the present invention is to provide a communication apparatus and method for supporting independent channel estimation for a relay link when a direct link and the relay link are distinguished using a frequency multiplexing in a multihop relay BWA communication system. The invention is defined by the appended claims.

### BRIEF DESCRIPTION OF THE DRAWINGS

The above and other objects, features and advantages of the present invention will become more apparent from the following detailed description when taken in conjunction with the accompanying drawings in which:
FIG. 1 illustrates a configuration of a general multihop relay cellular network;
FIG. 2 illustrates a general diversity subcarrier allocation scheme;
FIG. 3 illustrates a general adjacent subcarrier allocation scheme;
FIG. 4 illustrates a general hybrid subcarrier allocation scheme;
FIG. 5 illustrates a frame structure which distinguishes a direct link from a relay link using a frequency division multiplexing scheme;
FIG. 6 is a block diagram of a BS in a BWA communication system according to the present invention;
FIG. 7 is a flowchart outlining a procedure of constructing a frame including a direct link and a relay link in the BWA communication system according to the present invention;
FIGs. 8A through 8G illustrate exemplary frame structures according to the present invention; and
FIG. 9 illustrates an embodiment of the present invention.

### DETAILED DESCRIPTION OF THE PREFERRED EMBODIMENTS

Preferred embodiments of the present invention will be described herein below with reference to the accompanying drawings. In the following description, well-known functions or constructions are not described in detail since they would obscure the invention in unnecessary detail.

The present invention suggests a method of satisfying the requirement for a dedicated pilot signal or pilot required in a relay link and reducing pilot overhead in a direct link when the direct link and the relay link are distinguished using a frequency multiplexing in a multihop relay BWA communication system.

The OFDM or OFDMA communication system is exemplified herein as a multihop relay BWA communication system, but not limited to this system. The present invention is applicable to general multi-carrier communication systems.

In the multihop relay BWA communication system, an RS may be a fixed or mobile node, a specific system installed by a provider, or a general subscriber station. A certain node having the above feature can be selected as the RS through an RS capability negotiation procedure with a BS according to a predefined criterion for the cell area expansion or the cell capacity increase of the BS.

The following description exemplifies subchannel allocation schemes suggested by IEEE 802.16. As discussed earlier, the diversity subcarrier allocation schemes include DL FUSC, DL OFUSC, DL PUSC, etc. , the adjacent subcarrier allocation schemes include AMC, etc., and the hybrid subcarrier allocation schemes include UL PUSC, UL OPUSC, etc. Of these schemes, UL PUSC, OPUSC, and AMC are the subcarrier allocation schemes using the dedicated pilot based permutation.

When the direct link and the relay link are distinguished using the frequency multiplexing scheme as shown in FIG. 5, the present invention applies the common pilot based permutation to the direct link and the dedicated pilot based permutation to the relay link. It is noted that the positions of the direct link area and the relay link area can be exchanged in FIG. 5.

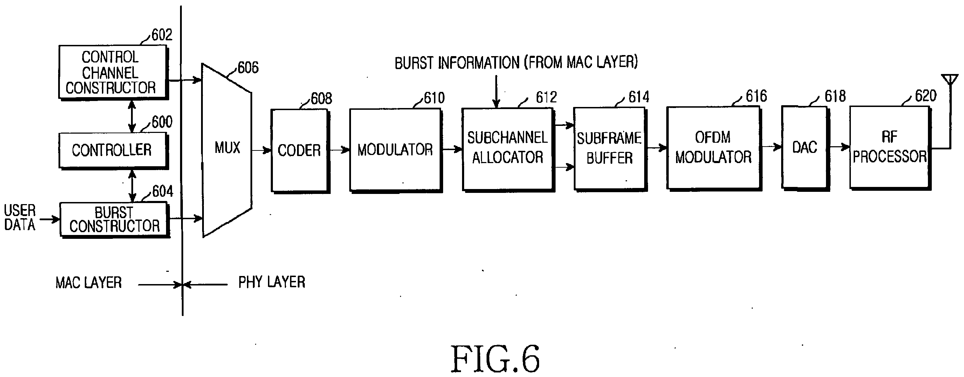

FIG. 6 is a block diagram of a BS in a BWA communication system according to the present invention.

As shown in FIG. 6, the BS includes a controller 600, a control channel constructor 602, a burst constructor 604, a multiplexer (MUX) 606, a coder 608, a modulator 610, a subchannel allocator 612, a subframe buffer 614, an OFDM modulator 616, a Digital/Analog Converter (DAC) 618, and a Radio Frequency (RF) processor 620. Hereafter, the explanations provided herein are based mainly on scheduling and a direct link transmission of an L-th frame.

Referring to FIG. 6, the controller 600 performs scheduling of the L-th frame and determines a frequency division of the L-th frame. As for the L-th frame, after dividing the entire frequency band between the direct link area and the relay link area, the controller 600 determines the channel status of the direct link and the relay link. Depending on the channel status, the controller 600 determines subcarrier allocation schemes to be applied to the direct link area and the relay link area. The channel status of the direct link can be determined using channel information (e.g., Channel Quality Information (CQI)) fed back from MSs, and the channel status of the relay link can be determined using channel information reported from RSs.

The controller 600 applies the common pilot based subcarrier allocation scheme to the direct link area and the dedicated pilot based subcarrier allocation scheme to the relay link area. Control information (frequency division information, resource allocation information, subcarrier allocation scheme, etc.), which is generated through this scheduling, is provided to the control channel constructor 602. Control information relating to the relay link of the L-th frame should be transmitted through a control channel of a prior channel of the L-th frame. Also, the controller 600 controls burst generation at the burst constructor 604 depending on the scheduling result.

At the transmission time of the L-th frame, the control channel constructor 602 constructs and outputs a control channel (e.g., MAP channel) transmitted in a prior interval of the L-th frame under the control of the controller 600. The burst constructor 604 constructs and outputs user data provided from an upper layer as a burst, which is a transmission unit, under the control of the controller 600.

The MUX 606 multiplexes the control channel burst from the control channel constructor 602 and the data bursts from the burst constructor 604 based on a predefined rule.

The coder 608 codes the information bit string from the MUX 606 at a corresponding coding rate and outputs coded data (coded bits or symbols). When the number of information bits is k and the coding rate is R, the number of the output symbols is k/R. The coder 608 can be a convolutional encoder, a turbo encoder, a Low Density Parity Check (LDPC) encoder, etc.

The modulator 610 outputs complex symbols by mapping the symbols fed from the coder 608 to signal points according to a corresponding modulation scheme (modulation level). For example, the modulation schemes include a Binary Phase Shift Keying (BPSK) which maps one bit (s=1) to one signal point (complex symbol), a Quadrature Phase Shift Keying (QPSK) which maps two bits (s=2) to one complex symbol, a 8-ary Phase Shift Keying (8PSK) which maps three bits (s=3) to one complex symbol, a 16-ary Quadrature Amplitude Modulation (16QAM) which maps four bits (s=4) to one complex symbol, and a 64QAM which maps six bits (s=6) to one complex symbol.

The subchannel allocator 612 maps the complex symbols fed from the modulator 610 to the subchannel based on burst information provided from the MAC layer, and outputs the subchannel-mapped complex symbols to corresponding memory addresses of the subframe buffer 614 corresponding to the actual direct link subframe size. In doing so, as the BS-MS direct link uses the common pilot based subcarrier allocation scheme, the symbols from the modulator 610 are mapped to the subchannel according to the common pilot based subcarrier allocation scheme.

The subframe buffer 614 is a buffer which maps the subchannel-mapped complex symbols to the actual physical subcarriers, that is, a buffer which arranges the subchannel-mapped complex symbols in accordance with the actual transmission order. The subframe buffer 614 sequentially outputs the complex symbols, which are buffered based on the time synchronization, by the OFDM symbol.

The OFDM modulator 616 transforms the complex symbols fed from the subframe buffer 614 into time domain sample data through Inverse Fast Fourier Transformation (IFFT), and outputs OFDMA symbols by duplicating and appending a rear portion of the sample data to the front of the sample data.

The DAC 618 converts the sample data of the OFDM modulator 616 to an analog signal. The RF processor 620 includes a filter and a front end unit. The RF processor 620 RF-processes the signal output from the DAC 618 to a transmittable form and sends it via a transmission (Tx) antenna in the radio channel.

The control channel transmitted from the BS is a broadcast channel. Every MS and RS in the cell coverage area receives and analyzes the control channel. The RSs recognize the relay link subcarrier allocation scheme of the L-th frame by analyzing the control channel received from the BS, and send the data to be transmitted to the MS by mapping the data to the subchannel according to the recognized subcarrier allocation scheme. The subcarrier allocation scheme of the relay link, which is informed to the RS by the BS, is the subcarrier allocation scheme which can utilize the independent pilot from the BS. The structure of the RS which sends a signal is the same as that of the BS as shown in FIG. 6.

According to the present invention, the RSs communicating with the BS attempt multiple access through subchannel division, and the BS informs the RS of the resources allocated to the RS and the subcarrier allocation scheme through the scheduling relating to the relay link. The RSs utilize the dedicated pilot based subcarrier allocation scheme for the relay link.

Alternatively, if the resources (area) for the relay link are fixed and the RSs attempt multiple access according to a spatial multiplexing scheme, the RSs can determine the subcarrier allocation scheme by themselves by measuring the MS channel status. In this case, since the RSs establishing the relay link transmit signals in different spaces, the common pilot based subcarrier allocation scheme can be used for the relay link.

In case where the frequency resources for the relay link are fixed and the RSs attempt multiple access according to a time multiplexing scheme, the BS can merely inform the RSs of the time resource information and the RSs can determine the subcarrier allocation schemes by themselves by measuring the MS channel status. In this case, the RSs can adopt the common pilot based subcarrier allocation scheme.

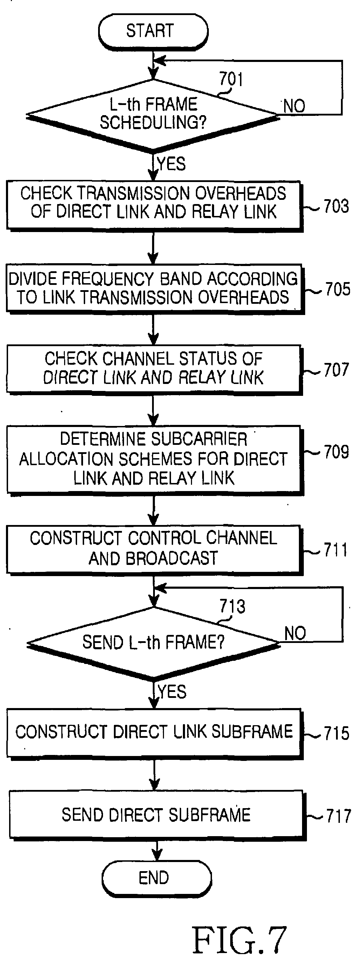

FIG. 7 is a flowchart outlining a procedure of constructing a frame including a direct link and a relay link in the BWA communication system according to the present invention. The following procedure describes a case where the BS determines the subcarrier allocation schemes for the direct link and the relay link through the scheduling.

Referring to FIG. 7, in step 701 the BS determines if the scheduling for the L-th frame is required. When the scheduling for the L-th frame is required, in step 703 the BS determines a transmission overhead of the direct link and a transmission overhead of the relay link with respect to the L-th frame.

After determining the link transmission overhead required by the direct link and the relay link, in step 705 the BS divides all of the frequency bands to areas depending on the link transmission overhead. In step 707, the BS determines channel status of the direct link area and channel status of the relay link area. The channel status of the direct link area can be determined using the channel information (BS-MS channel information) reported from the MSs, and the channel status of the relay link area can be determined using the channel information reported from the RSs (RS-MS channel information).

After determining the link channel status, in step 709 the BS determines subcarrier allocation schemes for the direct link area and the relay link area, based on the channel status. By doing so, the substantial resource scheduling is carried out. The subcarrier allocation scheme applied to the direct link area is the common pilot based subcarrier allocation scheme, and the subcarrier allocation scheme applied to the relay link area is the common pilot or dedicated pilot based subcarrier allocation scheme. The direct link area and the relay link area can be subdivided into a plurality of zones depending on the scheduling. The BS determines which zone is used by each RS and which area (burst) is allocated within the corresponding zone.

After scheduling of the L-th frame, in step 711 the BS broadcasts control information (frequency allocation information, resource allocation information of each RS, subcarrier allocation scheme information, etc.) relating to the relay link of the L-th frame on the control channel of the prior frame of the L-th frame.

Next, in step 713 the BS determines if transmission for the L-th frame is required. When the transmission for the L-th frame is required, in step 715 the BS constructs a direct link subframe according to the scheduling result of the L-th frame. By doing so, the direct link subframe is constructed using the common pilot based subcarrier allocation scheme.

In step 717, the BS transmits the constructed direct link subframe in the time interval of the L-th frame.Since the RSs have received the scheduling result of the L-th frame prior to the L-th frame, the signal is carried in the time interval of the L-th frame using the subcarrier allocation scheme designated by the BS. At this time, the RSs send signals using the common pilot or dedicated pilot based subcarrier allocation scheme in accordance with the multiple access scheme.

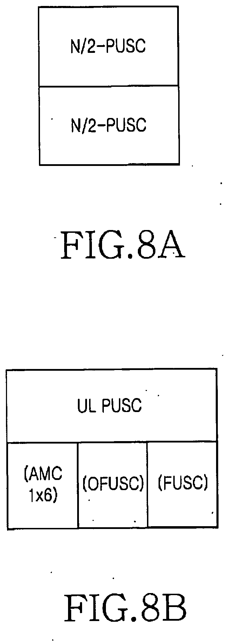

FIGs. 8A through 8G illustrate exemplary frame structures according to the present invention. In the frame structures, the upper portion indicates the relay link area and the lower portion indicates the direct link area.While the DL frame is exemplified for understanding, the UL can have the same frame structure.

Referring to FIG. 8A, the entire frequency band constructed with N-ary subcarriers is divided into two areas of N/2 size, and the PUSC scheme is applied to both the direct link area and the relay link area. The BS sends a signal to the MS using the PUSC scheme and the RSs send signals to the MS using the PUSC scheme as well.

Referring to FIG. 8B, the entire frequency band is divided into two areas and the dedicated pilot based UL PUSC scheme is applied to the relay link area. The direct link area is subdivided to three zones. The AMC (1×6) scheme, the OFUSC scheme, and the FUSC scheme are applied to the respective zones. Note that the divided size of the entire frequency band is variable depending on the transmission overhead of the direct link and the transmission overhead of the relay link. The minimum allocation unit of the AMC scheme is '1 symbol×6 subcarriers'.

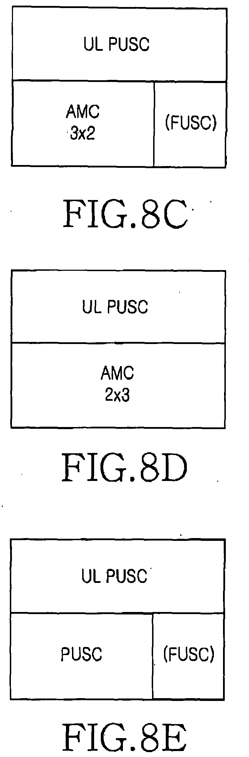

Referring to FIG. 8C, the entire frequency band is divided into two areas. The dedicated pilot based UL PUSC scheme is applied to the relay link area. The direct link area is subdivided to two zones, and the AMC (3×2) scheme and the FUSC scheme are applied to the respective zones.

Referring to FIG. 8D, the entire frequency band is divided into two areas. The dedicated pilot based UL PUSC scheme is applied to the relay link area and the AMC (2x3) scheme is applied to the direct link area.

Referring to FIG. 8E, the entire frequency band is divided into two areas. The dedicated pilot based UL PUSC scheme is applied to the relay link area. The direct link area is subdivided to two zones, and the PUSC scheme and the FUSC scheme are applied to the respective zones.

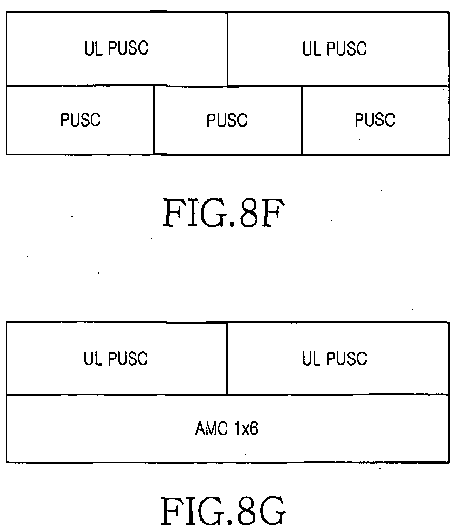

Referring to FIG. 8F, the entire frequency band is divided into two zones. The dedicated pilot based UL PUSC scheme is applied to the relay link area, and the PUSC scheme is applied to the direct link area. The minimum allocation unit of the US PUSC scheme is three symbols and that of the PUSC scheme is two symbols. Accordingly, given six symbol intervals, the minimum unit of the PUSC is three symbols and that of the UL PUSC is two.

Referring to FIG. 8G, the entire frequency band is divided into two zones. The dedicated pilot based UL PUSC scheme is applied to the relay link area and the AMC (1×6) scheme is applied to the direct link area.

Besides the frame structures of FIGs. 8A through 8G, there can be other various frame structures. For example, other dedicated pilot based subcarrier allocation schemes (e.g., OPUSC, AMC, etc.) are applicable to the relay link area of the above frame structures, instead of the UL PUSC scheme.

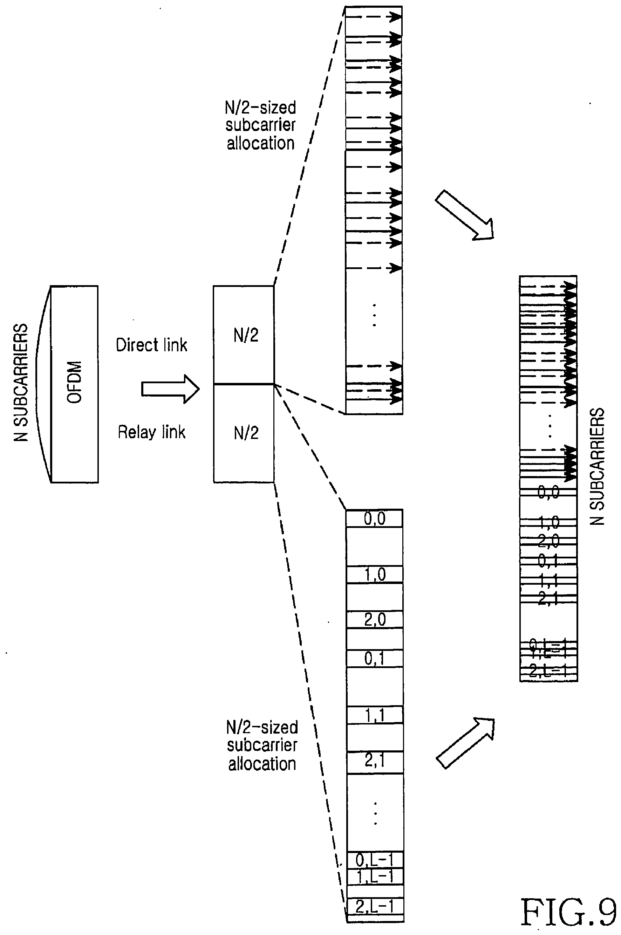

FIG. 9 illustrates an embodiment of the present invention.

As shown in FIG. 9, the entire frequency band consisting of N-ary subcarriers is physically divided into two or more areas. It is assumed that the entire frequency band is divided into two areas of N/2 size. The direct link corresponding to the upper portion allocates the subchannel according to the FUSC scheme and the relay link area corresponding to the lower portion allocates the subchannel according to the UL PUSC scheme. As such, the present invention employs the common pilot based permutation scheme for the direct link and the dedicated pilot based permutation scheme for the relay link, thereby achieving the independent channel estimation from the relay link.

As set forth above, when the direct link and the relay link are distinguished through the frequency multiplexing in the multihop relay BWA communication system, the present invention enables independent channel estimation from the relay link by adopting the dedicated pilot based permutation scheme or the common pilot based permutation scheme with small FFT size for the relay linkAdditionally, by adopting the common pilot based permutation scheme for the direct link, the pilot overhead for the entire frame can be optimized.

While the invention has been shown and described with reference to certain preferred embodiments thereof, additional variations and modifications in that embodiment may occur to those skilled in the art once they learn of the basic inventive concepts. For instance, while the entire frequency band is divided into two areas to support the direct link and the relay link according to the present invention, the frequency band can be divided to a greater number of areas to support a greater number of links having different characteristics and the subcarrier allocation schemes can be independently applied to the respective divided bands.

## Claims

1. A communication method in a wireless communication system, the method comprising:
dividing an entire frequency band into a plurality of bands, based on transmission overhead on each link (705), to support a plurality of links;
determining subcarrier allocation schemes for the divided bands, the determination being made independently from one another based on a channel status (707, 709), and
communicating by the plurality of the links using the determined subcarrier allocation schemes;
wherein the plurality of the links includes a direct link between a base station, BS, and a mobile station, MS, and a relay link between a relay station, RS, and an MS; and
determining the channel status of the direct link and determining the channel status of the relay link;
wherein a subcarrier allocation scheme with a dedicated pilot is applied to the divided band for the relay link; and
wherein a subcarrier allocation scheme with a common pilot is applied to the divided band for the direct link.

2. The communication method of claim 1, wherein the dedicated pilot based subcarrier allocation scheme is one of uplink Partial Usage of Subcarrier, UL PUSC, scheme, Optional PUSC, OPUSC, scheme, and Adaptive Modulation and Coding, AMC, scheme.

3. The communication method of claim 1, wherein the common pilot based subcarrier allocation scheme is one of PUSC scheme, AMC scheme, Full Usage of Subcarrier, FUSC, scheme, and Optional FUSC, OFUSC, scheme.

4. The communication method of claim 1, wherein the plurality of the links are links between a BS and an MS.

5. A communication apparatus in a wireless communication system, comprising:
a base station, BS, configured to communicate by applying subcarrier allocation scheme with a common pilot to a band of an entire frequency band allocated to a direct link between the BS and a mobile station, MS; and
a relay station, RS, configured to communicate by applying a subcarrier allocation scheme with a dedicated pilot to a band of the entire frequency band allocated to a relay link between the RS and an MS;
the BS is configured to determine a channel status for the band allocated to the direct link and to determine a channel status for the band allocated to the relay link; and wherein the applied subcarrier allocation schemes are based on the respective channel status;
and wherein the bands allocated to the direct link and to the relay link have been divided from the entire frequency bandwidth based on transmission overhead on each of the links.

6. The communication apparatus of claim 5, wherein the common pilot based permutation scheme is one of Partial Usage of Subcarrier, PUSC, Adaptive Modulation and Coding, AMC, Full Usage of Subcarrier, FUSC, and Optional FUSC, OFUSC.

7. The communication apparatus of claim 5, wherein the dedicated pilot based permutation scheme is one of uplink Partial Usage of Subcarrier, UL PUSC scheme, Optional PUSC, OPUSC, scheme, and Adaptive Modulation and Coding, AMC, scheme.

## Patentansprüche

1. Kommunikationsverfahren in einem drahtlosen Kommunikationssystem, wobei das Verfahren umfasst:
Teilen eines vollständigen Frequenzbands in eine Vielzahl von Bändern basierend auf dem Sende-Overhead in jeder Verbindung (705), um eine Vielzahl von Verbindungen zu unterstützen,
Bestimmen von Subträger-Zuweisungsschemata für die geteilten Bänder, wobei das Bestimmen unabhängig voneinander basierend auf einem Kanalstatus (707, 709) vorgenommen wird, und
Kommunizieren über die Vielzahl der Verbindungen unter Verwendung der bestimmten Subträger-Zuweisungsschemata,
wobei die Vielzahl der Verbindungen eine direkte Verbindung zwischen einer Basisstation (BS) und einer Mobilstation (MS) und eine Weiterleitungsverbindung zwischen einer Weiterleitungsstation (RS) und einer MS umfassen, und
Bestimmen des Kanalstatus der direkten Verbindung und Bestimmen des Kanalstatus der Weiterleitungsverbindung,
wobei ein Subträger-Zuweisungsschema mit einem dedizierten Piloten auf das geteilte Band für die Weiterleitungsverbindung angewendet wird, und
wobei ein Subträger-Zuweisungsschema mit einem gemeinsamen Piloten auf das geteilte Band für die direkte Verbindung angewendet wird.

2. Kommunikationsverfahren nach Anspruch 1, wobei das dedizierte, pilotbasierte Subträger-Zuweisungsschema ein UL PUSC (Uplink Partial Usage of Subcarrier)-Schema, ein OPUSC (Optional PUSC)-Schema oder ein AMC (Adaptive Modulation and Coding)=Schema ist.

3. Kommunikationsverfahren nach Anspruch 1, wobei das gemeinsame, pilotbasierte Subträger-Zuweisungsschema ein PUSC-Schema, AMC-Schema, FUSC (Full Usage of Subcarrier)-Schema oder OFUSC (Optional FUSC)-Schema ist.

4. Kommunikationsverfahren nach Anspruch 1, wobei die Vielzahl von Verbindungen Verbindungen zwischen einer BS und einer MS sind.

5. Kommunikationsvorrichtung in einem drahtlosen Kommunikationssystem, umfassend:
eine Basisstation (BS), die konfiguriert ist zum Kommunizieren durch das Anwenden eines Subträger-Zuweisungsschemas mit einem gemeinsamen Piloten auf ein Band eines vollständigen Frequenzbands, das einer direkten Verbindung zwischen der BS und einer Mobilstation (MS) zugewiesen ist, und
eine Weiterleitungsstation (RS), die konfiguriert ist zum Kommunizieren durch das Anwenden eines Subträger-Zuweisungsschemas mit einem dedizierten Piloten auf ein Band des vollständigen Frequenzbands, das einer Weiterleitungsverbindung zwischen der RS und einer MS zugewiesen ist,
wobei die BS konfiguriert ist zum Bestimmen eines Kanalstatus für das der direkten Verbindung zugewiesene Band und zum Bestimmen eines Kanalstatus für das der Weiterleitungsverbindung zugewiesene Band,
wobei die angewendeten Subträger-Zuweisungsschemata auf dem entsprechenden Kanalstatus basieren, und
wobei die der direkten Verbindung und der Weiterleitungsverbindung zugewiesenen Bänder von dem vollständigen Frequenzband basierend auf dem Sende-Overhead in jeder der Verbindungen geteilt wurden.

6. Kommunikationsvorrichtung nach Anspruch 5, wobei das gemeinsame, pilotbasierte Permutationsschema ein PUSC (Partial Usage of Subcarrier)-Schema, ein AMC (Adaptive Modulation and Coding)-Schma, ein FUSC (Full Usage of Subcarrier)-Schema oder ein OFUSC (Optional FUSC)-Schema ist.

7. Kommunikationsvorrichtung nach Anspruch 5, wobei das dedizierte, pilotbasierte Permutationsschema ein UL PUSC (Uplink Partial Usage of Subcarrier)-Schema, ein OPUSC (Optional PUSC)-Schema oder ein AMC (Adaptive Modulation and Coding)-Schema ist.

## Revendications

1. Procédé de communication dans un système de communication sans fil, le procédé comprenant les étapes consistant à :
diviser une bande de fréquences entière en une pluralité de bandes en se fondant sur une surcharge de transmission sur chaque liaison (705) pour soutenir une pluralité de liaisons ;
déterminer des schémas d'allocation de sous-porteuses pour les bandes divisées, les déterminations étant effectuées indépendamment les unes des autres en se fondant sur un statut de canal (707, 709), et
communiquer via la pluralité de liaisons en utilisant les schémas d'allocation de sous-porteuses déterminés ;
où la pluralité de liaisons inclut une liaison directe entre une station de base, BS, et une station mobile, MS, et une liaison relais entre une station relais, RS et une MS ; et
déterminer le statut de canal de la liaison directe et déterminer le statut de canal de la liaison relais ;
où un schéma d'allocation de sous-porteuse avec un pilote dédié est appliqué à la bande divisée pour la liaison relais ;
où un schéma d'allocation de sous-porteuse avec un pilote commun est appliqué à la bande divisée pour la liaison directe.

2. Procédé de communication selon la revendication 1, où le schéma d'allocation de sous-porteuse fondé sur un pilote dédié est un schéma parmi un schéma d'utilisation partielle de sous-porteuse en liaison montante, UL PUSC, un schéma PUSC optionnel, OPUSC, et un schéma de modulation/codage adaptative, AMC.

3. Procédé de communication selon la revendication 1, où le schéma d'allocation de sous-porteuse fondé sur un pilote commun est un schéma parmi un schéma PUSC, un schéma AMC, un schéma d'utilisation totale de sous-porteuse, FUSC, et un schéma FUSC optionnel, OFUSC.

4. Procédé de communication selon la revendication 1, où la pluralité de liaisons est des liaisons entre une BS et une MS.

5. Appareil de communication dans un système de communication sans fil, comprenant :
une station de base, BS, configurée pour communiquer en appliquant un schéma d'allocation de sous-porteuse avec un pilote commun à une bande d'une bande de fréquence entière allouée à une liaison directe entre la BS et une station mobile, MS ; et
une station relais, RS, configurée pour communiquer en appliquant un schéma d'allocation de sous-porteuse avec un pilote dédié à une bande de la bande de fréquence entière allouée à une liaison relais entre la RS et une MS ;
la BS est configurée pour déterminer un statut de canal pour la bande allouée à la liaison directe et pour déterminer un statut de canal pour la bande allouée à la liaison relais ; et où les schémas d'allocation de sous-porteuse appliqués sont fondés sur le statut de canal respectif ;
et où les bandes allouées à la liaison directe et à la liaison relais ont été divisées au sein de la bande de fréquence entière en se fondant sur une surcharge de transmission sur chacune des liaisons.

6. Appareil de communication selon la revendication 5, où le schéma de permutation fondé sur un pilote commun est un schéma parmi un schéma d'utilisation partielle de sous-porteuse, PUSC, un schéma AMC, un schéma d'utilisation totale de sous-porteuse, FUSC, et un schéma FUSC optionnel, OFUSC.

7. Procédé de communication selon la revendication 5, où le schéma de permutation fondé sur un pilote dédié est un schéma parmi un schéma d'utilisation partielle de sous-porteuse en liaison montante, UL PUSC, un schéma PUSC optionnel, OPUSC, et un schéma de modulation/codage adaptative, AMC.
